# EUROPEAN PATENT APPLICATION

(11) **EP 4 030 279 A1**
(43) Date of publication of application: **20.07.2022**
(21) Application number: 22151422.7
(22) Date of filing: 13.01.2022
(51) Int. Cl.: G06F 8/65, G06Q 30/06

(54) **TECHNOLOGY NOTIFICATION SYSTEM**

(30) Priority: 14.01.2021 JP 2021004353
(71) Applicant: TOYOTA JIDOSHA KABUSHIKI KAISHA, Toyota-shi, Aichi-ken, 471-8571 (JP)
(72) Inventor: TONE, Yuta, TOYOTA-SHI, AICHI-KEN, 471-8571 (JP); ISHIZUKA, Naoki, TOYOTA-SHI, AICHI-KEN, 471-8571 (JP); YANO, Yuichiro, TOYOTA-SHI, AICHI-KEN, 471-8571 (JP); TANAKA, Tadayuki, TOYOTA-SHI, AICHI-KEN, 471-8571 (JP); YAZAKI, Kei, TOYOTA-SHI, AICHI-KEN, 471-8571 (JP); II, Yukinori, TOYOTA-SHI, AICHI-KEN, 471-8571 (JP); MAEDA, Yusuke, TOYOTA-SHI, AICHI-KEN, 471-8571 (JP); AMANO, Nariaki, TOYOTA-SHI, AICHI-KEN, 471-8571 (JP); INO, Kentaro, TOYOTA-SHI, AICHI-KEN, 471-8571 (JP)
(74) Representative: Cabinet Beau de Loménie

(57) **Abstract**

The technology notification system (3) includes a server (12) which stores new technology data (NTD1, NTD2) related to a new technology whose technical effect has been confirmed by racing a racing vehicle (10) incorporated with the new technology in a motor racing event (WRC2), and a distribution device (32) which distributes technology notification information related to the new technology data (NTD1, NTD2).

## Description

This non-provisional application is based on Japanese Patent Application No. 2021-004353 filed on January 14, 2021 with the Japan Patent Office, the entire contents of which are hereby incorporated by reference and to which the person of the art can refer to when considering the present disclosure.

### BACKGROUND

### Field

The present disclosure relates to a technology notification system.

### Description of the Background Art

Conventionally, in a method for selling used vehicles, there is proposed a system which provides a used vehicle installed with an audio system to a purchaser (Japanese Patent Laying-Open No. 2004-013453).

### SUMMARY

Generally, a new technology may be developed based on knowledge obtained by racing a racing vehicle in a motor racing event. However, functions in vehicles that have been sold are rarely updated after sale.

A user who has a vehicle of the same type as the racing vehicle may wish to incorporate a new technology developed based on knowledge obtained from a motor racing event into his/her vehicle. However, the user may not know the fact that a new technology has been developed based on a motor racing event.

The present disclosure has been accomplished in view of the aforementioned problem, and an object of the present disclosure is to provide a technology notification system which when a new technology has been developed based on knowledge obtained by racing a racing vehicle in a motor racing event, notifies a user who has a vehicle to which the new technology is applicable of information about the new technology.

The technology notification system according to the present disclosure includes a server which stores new technology data related to a new technology whose technical effect has been confirmed by racing a racing vehicle incorporated with the new technology in a motor racing event, and a distribution device which distributes technology notification information related to the new technology data.

According to the technology notification system described above, a user may acquire information about a new technology developed based on a motor racing event.

The technology notification system further includes a provider terminal to be used by a service provider to provide a service related to a user vehicle of a user, and the distribution device distributes the technology notification information to the provider terminal.

The provider terminal distributes the technology notification information to a user terminal of the user of the user vehicle to which the new technology is applicable.

The distribution device distributes the technology notification information to a user terminal of the user of the user vehicle to which the new technology is applicable.

The new technology includes an optional technology to be incorporated into a user vehicle based on the user's selection and an essential technology to be incorporated into the user vehicle irrespective of the user's selection, and the technology notification information includes a selection notification which notifies the user to select whether or not to incorporate the optional technology into the user vehicle and a contact notification which notifies the user that the essential technology is to be incorporated into the user vehicle.

According to the technology notification system, the user may select whether or not to incorporate the optional technology into the user vehicle. In addition, the user may be notified that the essential technology is incorporated.

The new technology includes a technology related to software and a technology related to hardware. According to the technology notification system, the user may be notified of both a new technology related to software and a new technology related to hardware.

The technology notification system further includes a charging unit which charges the user of the user vehicle a usage fee to be paid to the service provider.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a block diagram schematically illustrating a technology development system 1 according to a first embodiment;
Fig. 2 is a schematic view schematically illustrating a racing vehicle 10 according to the first embodiment;
Fig. 3 is a cross-sectional view schematically illustrating a power distribution device 86 according to the first embodiment;
Fig. 4 is a perspective view schematically illustrating an air cleaner 73 according to the first embodiment;
Fig. 5 is a perspective view schematically illustrating an undercover 71 according to the first embodiment;
Fig. 6 is a front view schematically illustrating an input device 11 illustrated in Fig. 1 according to the first embodiment;
Fig. 7 is a back view schematically illustrating the input device 11 illustrated in Fig. 1 according to the first embodiment;
Fig. 8 is a schematic diagram schematically illustrating a new technology NT1 according to the first embodiment;
Fig. 9 is a schematic diagram schematically illustrating a new technology NT2 according to the first embodiment;
Fig. 10 is a schematic diagram schematically illustrating a new technology NT3 according to the first embodiment;
Fig. 11 is a schematic diagram schematically illustrating a new technology NT4 according to the first embodiment;
Fig. 12 is a schematic diagram schematically illustrating a technology notification system 3 according to the first embodiment;
Fig. 13 is a schematic diagram schematically illustrating a distribution device 32, a provider terminal 38 according to the first embodiment;
Fig. 14 is a schematic diagram schematically illustrating a relationship between a distribution device 32, user terminals 35A to 35D, a service provider 37, and the like according to the first embodiment;
Fig. 15 is a schematic diagram schematically illustrating a relationship between the distribution device 32, the user terminals 35A to 35D, the service provider 37, and the like according to the first embodiment;
Fig. 16 is a flowchart illustrating the confirmation of the contents of a user request signal in step 41 according to the first embodiment;
Fig. 17 is a schematic diagram schematically illustrating a relationship between the distribution device 32, the user terminals 35A to 35D, the service provider 37, and the like according to the first embodiment;
Fig. 18 is a schematic diagram schematically illustrating a technology notification system 3A according to a second embodiment;
Fig. 19 is a schematic diagram schematically illustrating a distribution device 32 and a provider terminal 38 according to the second embodiment;
Fig. 20 is a schematic diagram schematically illustrating a relationship between a manufacturing device 39, a provider terminal 38, a server 12, a user terminal 35, and the like according to the second embodiment;
Fig. 21 is a schematic diagram schematically illustrating a relationship between the manufacturing device 39, the provider terminal 38, the server 12, the user terminal 35, and the like according to the second embodiment;
Fig. 22 is a flow chart illustrating the confirmation of the contents of a user request signal in step 114 according to the second embodiment;
Fig. 23 is a schematic diagram schematically illustrating a relationship between the manufacturing device 39, the provider terminal 38, the server 12, the user terminal 35, and the like according to the second embodiment.

### DESCRIPTION OF THE PREFERRED EMBODIMENTS

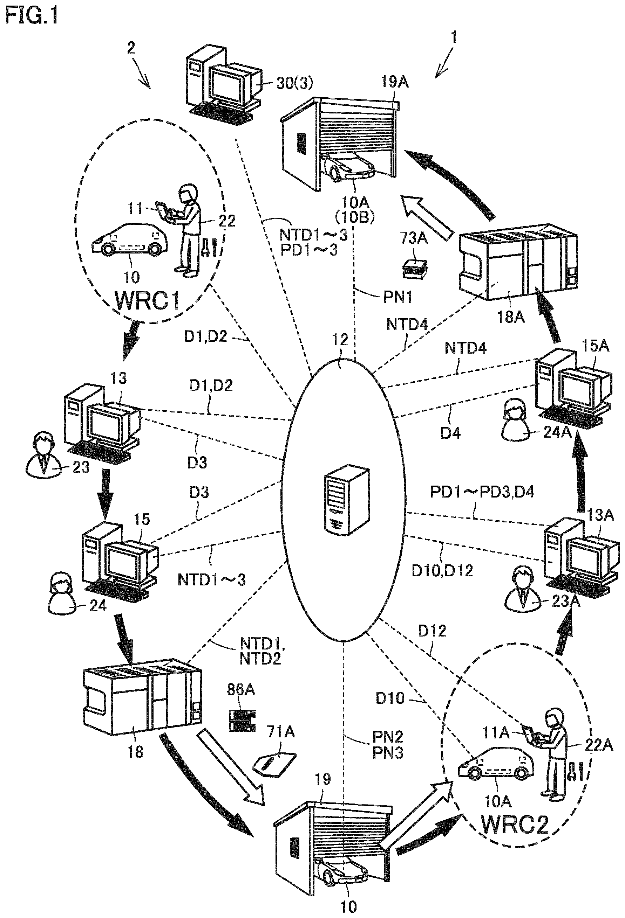

A technology development system 1 according to the present disclosure will be described with reference to Figs. 1 to 23. In the configurations illustrated in Figs. 1 to 23, the same or substantially the same components are denoted by the same reference numerals, and the description thereof will not be repeated.

### (First Embodiment)

Fig. 1 is a block diagram schematically illustrating a technology development system 1 according to a first embodiment. The technology development system 1 includes a development system 2 and a technology notification system 3.

The development system 2 is configured to develop a new technology so as to solve a technical task extracted by racing a racing vehicle 10 in a motor racing event.

The technology notification system 3 is configured to send notification messages M1 to M4, each of which summarizes a new technology developed based on a motor racing event, to a user terminal to be used by a user of a user vehicle to which the new technology is applicable.

The racing vehicle 10 is configured to be raced in a motor racing event. The motor racing event includes, for example, FIA World Rally Championship (WRC).

The WRC is a time attack competition in which each driver drives a commercial available racing vehicle 10 to compete for the best time along a variety of courses (traffic-regulated public roads). In the WRC, the course along which the racing vehicle 10 travels includes roads prepared with various conditions, such as a tarmac road (paved road), a gravel road (unpaved road), and a snow and ice road.

The unpaved road is often a rough road with vigorous irregularities. The paved road is often an asphalt-paved mountain road with continuous sharp corners. The snow and ice road is often a frozen road covered with snow and ice.

Thus, a motor rally event such as the WRC is a racing event in which drivers in the world compete for speed on public roads.

The development system 2 will be described. The development system 2 includes racing vehicles 10A and 10, input devices 11A and 11, a server 12, analysis devices 13A and 13, development tools 15A and 15, manufacturing devices 18A and 18, and maintenance pits 19A and 19.

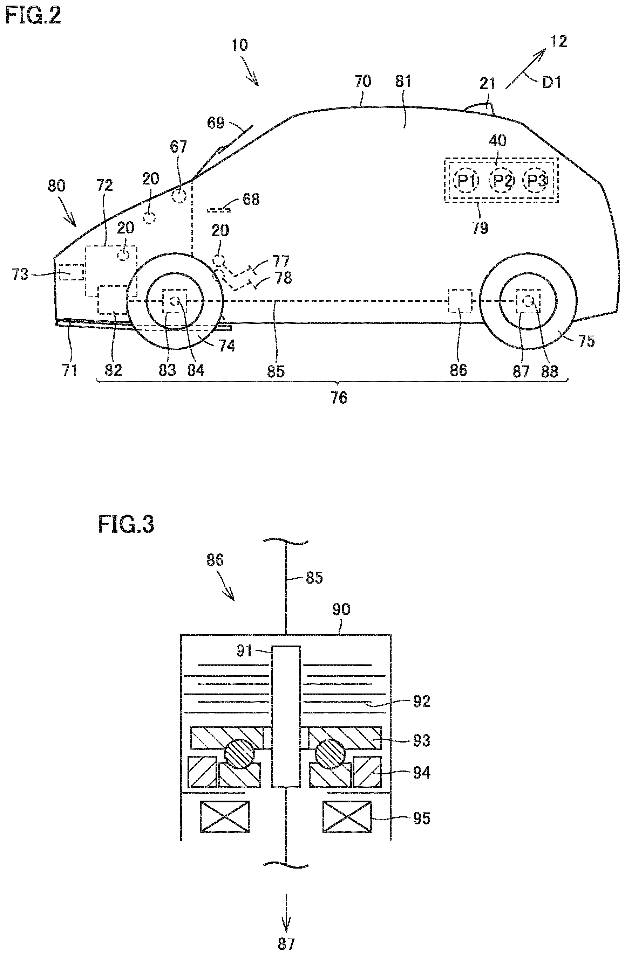

Fig. 2 is a schematic view schematically illustrating a racing vehicle 10. The racing vehicle 10 is configured to race along a course in a motor racing event. The racing vehicle 10 includes a body 70, an undercover 71, an engine 72, an air cleaner 73, a pair of front wheels 74, a pair of rear wheels 75, a power transmission device 76, an accelerator pedal 77, a brake pedal 78, a controller 79, a plurality of sensors 20, and a communication device 21. The racing vehicle 10 further includes a wiper 69 for wiping the windshield, a wiper switch 68, and a drive motor 67.

The body 70 includes an engine compartment 80 and a vehicle compartment 81. The undercover 71 is attached to the bottom surface of the body 70 and is disposed below the engine compartment 80.

The wiper switch 68 is configured to stop the wiping of the wiper 69 and adjust a wiping speed of the wiper 69. For example, the wiper switch 68 may switch the wiping speed of the wiper 69 between "speed 1", "speed 2" and "speed 3". Note that "speed 1" is the slowest speed, and "speed 3" is the fastest speed. The drive motor 67 is configured to drive the wiper 69.

The engine 72 and the air cleaner 73 are accommodated in the engine compartment 80.

The air cleaner 73 is provided in an air inlet configured to supply air to the engine 72. The air is supplied to the engine 72 through the air cleaner 73.

The engine 72 mixes the air supplied from the air cleaner 73 with fuel such as gasoline and combust the mixture to generate a driving power.

The power transmission device 76 includes a transmission 82, a front differential 83, a front drive shaft 84, a propeller shaft 85, a power distribution device 86, a rear differential 87, and a rear drive shaft 88.

The power transmission device 76 transmits the driving power generated by the engine 72 to the pair of front wheels 74 constantly, and transmits the driving power generated by the engine 72 to the pair of rear wheels 75 optionally in accordance with the vehicle condition. In other words, the racing vehicle 10 is an on-demand four-wheel drive vehicle. For example, when the racing vehicle 10 travels straight at a constant speed, it travels at a two-wheel drive state in which the driving power is transmitted only to the pair of front wheels 74. In the two-wheel drive state, the power distribution device 86 blocks the power transmission between the propeller shaft 85 and the rear differential 87.

When the pair of front wheels 74 slips, for example, as the vehicle travels on a low friction road, as the vehicle is started or accelerated, or as the vehicle corners, by increasing the torque transmitted to the pair of rear wheels 75, the racing vehicle 10 travels at a four-wheel drive state.

In the four-wheel drive state, the power distribution device 86 transmits the driving power from the propeller shaft 85 to the rear differential 87.

For example, when the pair of front wheels 74 slips as the racing vehicle 10 corners, it is possible to reduce the understeer by increasing the torque transmitted to the pair of rear wheels 75.

Fig. 3 is a cross-sectional view schematically illustrating the power distribution device 86. The power distribution device 86 includes a housing 90, an inner shaft 91, a plurality of clutch plates 92, a cam mechanism 93, an electromagnetic clutch 94, and an electromagnetic coil 95.

The housing 90 is formed in a cylindrical shape, and the propeller shaft 85 is connected to the housing 90. The inner shaft 91 is disposed inside the housing 90 and is arranged coaxially with the central axis of the housing 90. The plurality of clutch plates 92 are arranged between the housing 90 and the inner shaft 91. The inner shaft 91 is mechanically connected to the rear differential 87.

When the electromagnetic coil 95 is energized, the electromagnetic clutch 94 is coupled to the housing 90. After the electromagnetic clutch 94 is coupled to the housing 90, the driving power transmitted to the housing 90 is transmitted to the electromagnetic clutch 94. The driving power transmitted to the electromagnetic clutch 94 drives the cam mechanism 93 to press the plurality of clutch plates 92.

After the plurality of clutch plates 92 are pressed, the frictional force between the clutch plates 92 increases, and thereby, the driving power transmitted to the housing 90 is transmitted to the inner shaft 91. As a result, the driving power is transmitted from the inner shaft 91 to the rear differential 87.

Thus, the driving power transmitted to the rear differential 87 is adjusted by the amount of current supplied to the electromagnetic coil 95.

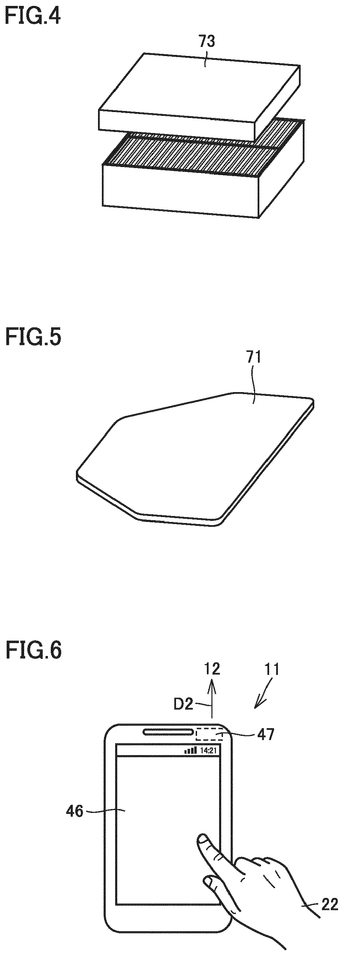

Fig. 4 is a perspective view schematically illustrating the air cleaner 73. The air cleaner 73 includes an accommodation case and a filter accommodated in the accommodation case. Fig. 5 is a perspective view schematically illustrating the undercover 71. The undercover 71 is formed in a plate shape.

As illustrated in Fig. 2, the controller 79 controls the power distribution device 86. The power distribution device 86 adjusts the torque transmitted to the rear differential 87 and the pair of rear wheels 75 based on a command issued from the controller 79. The controller 79 controls the drive motor 67 based on a wiping speed selected by the wiper switch 68.

The controller 79 controls the engine 72, the power distribution device 86 and the like. The controller 79 includes a storage unit 40. The storage unit 40 stores an engine control program P1 for controlling the engine 72, a power distribution program P2 for controlling the power distribution device 86, and a wiper drive program P3.

The plurality of sensors 20 acquire various travel data D1 from the racing vehicle 10 travelling along a course. The travel data D1 acquired by each sensor 20 includes, for example, a travel time, a vehicle speed, a three-axis acceleration (G), an angular velocity (yaw), an engine speed, an oil-water temperature, a throttle opening, a depression amount of the accelerator pedal, and a depression amount of the brake pedal. Each sensor 20 sends the travel data D1 to the controller 79.

The controller 79 sends the travel data D1 received from each sensor 20 to the server 12 through the communication device 21. The communication device 21 communicates with an external server such as the server 12. The travel data D1 includes a vehicle ID to identify a racing vehicle 10.

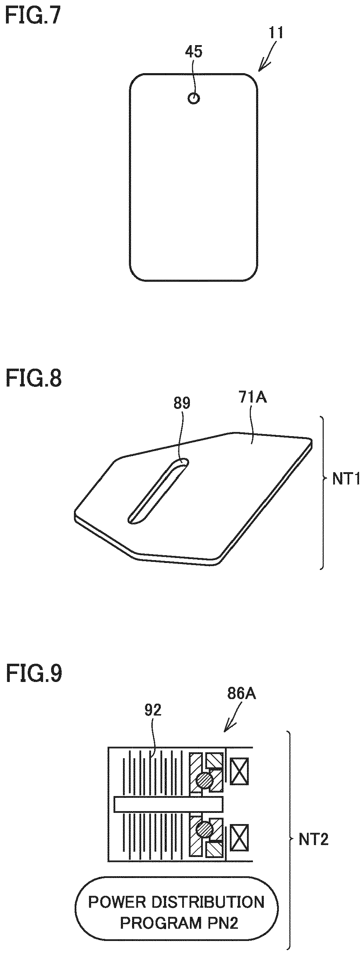

Figs. 6 and 7 are schematic views schematically illustrating the input device 11 illustrated in Fig. 1. The input device 11 includes, for example, an imaging unit 45 such as a camera, a display unit 46, and a communication unit 47, and is configured to send input data to the server 12. The input device 11A has substantially the same configuration as the input device 11.

In the motor racing event WRC1, a mechanic crew 22 may capture an image of a damaged portion of the racing vehicle 10 by using the imaging unit 45, and may input text information about the damaged portion by using a soft keyboard displayed on the display unit 46. Then, the communication unit 47 sends damage data including at least one of the image and the text information to the server 12.

The mechanic crew 22 carries a communication device that communicates with a driver. Therefore, the mechanic crew 22 may input mobility data related to the drivability and the like sent from the driver during the travelling into the input device 11, and send the mobility data to the server 12.

Thus, the input device 11 sends input data D2 including at least one of the damage data and the mobility data to the server 12. The input data D2 includes a vehicle ID to identify a racing vehicle 10.

Referring back to Fig. 1, the server 12 stores the travel data D1 received from the racing vehicle 10 and the input data D2 received from the input device 11.

The server 12 stores vehicle information of a racing vehicle 10 participating in a motor racing event such as the WRC. The vehicle information of a racing vehicle 10 includes, for example, includes a vehicle ID, a vehicle type, and information related to the motor racing event in which the racing vehicle 10 participates. The vehicle information of the racing vehicle 10 may be stored in the server 12 in advance, for example, when the racing vehicle 10 participates in the motor racing event. When a plurality of racing vehicles participate in a motor racing event such as the WRC, each racing vehicle is given with a unique vehicle ID. The server 12 stores the travel data D1 and the input data D2 for each racing vehicle.

The analysis device 13 is used by an analyst 23 to extract a technical task related to the racing vehicle 10 based on at least one of the travel data D1 and the input data D2 stored in the server 12. Specifically, the analysis device 13 acquires at least one of the travel data D1 and the input data D2 of the racing vehicle 10 from the server 12. Then, the analyst 23 uses the analysis device 13 to extract a technical task related to the racing vehicle 10 based on at least one of the travel data D1 and the input data D2. The analyst 23 inputs the technical task into the analysis device 13, and the analysis device 13 sends task data D3 related to the technical task to the server 12.

In the first embodiment, the analyst 23 extracts, for example, three technical tasks TC1 to TC3.

For example, the analyst 23 uses the analysis device 13 to extract a technical task TC1 that the temperature of the engine 72 of the racing vehicle 10 tends to rise based on the travel time and the oil-water temperature.

For example, the analyst 23 uses the analysis device 13 to extract a technical task TC2 that the understeer becomes greater as the racing vehicle 10 corners on a low friction road.

For example, the analyst 23 uses the analysis device 13 to extract a technical task TC3 that the wiping speed of the wiper 69 is low even though "speed 3" is selected.

Thus, the analysis device 13 sends the task data D3 related to the technical tasks TC1 to TC3 extracted by the analyst 23 to the server 12. The task data D3 includes the vehicle ID of the racing vehicle 10.

The server 12 stores the task data D3 received from the analysis device 13. The development tool 15 is used by a developer 24 to acquire the task data D3 of the racing vehicle 10 from the server 12 and develop new technologies NT1 to NT3 so as to solve the technical tasks TC1 to TC3 indicated by the task data D3 stored in the server 12.

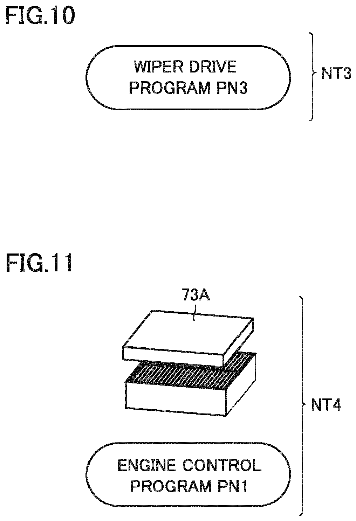

Fig. 8 is a schematic diagram schematically illustrating the new technology NT1. Fig. 9 is a schematic diagram schematically illustrating the new technology NT2. Fig. 10 is a schematic diagram schematically illustrating the new technology NT3.

Referring to Fig. 8, for example, in order to solve the technical task TC1 that the temperature of engine 72 tends to rise, the developer 24 uses the development tool 15 to develop a new undercover 71A. An air inlet 89 is formed in the undercover 71A so as to penetrate through the undercover 71A.

When the undercover 71A is attached to the racing vehicle 10, the air sucked through the air inlet 89 may be supplied into the engine compartment 80, which makes it possible to cool down the engine 72. As mentioned above, the developer 24 develops the undercover 71A corresponding to the new technology NT1. The development tool 15 sends new technology data NTD1 related to the new technology NT1 to the server 12.

In Fig. 9, for example, in order to solve the technical task TC2 that the understeer becomes greater as the racing vehicle 10 corners on a low friction road, the developer 24 develops a new power distribution device 86A and a power distribution program PN2.

For example, the number of clutch plates 92 provided in the power distribution device 86A is larger than the number of clutch plates 92 provided in the power distribution device 86. According to the power distribution device 86A, it is possible to quickly and smoothly adjust the power distributed to the pair of front wheels and the pair of rear wheels.

Thus, immediately after the controller 79 detects the slip of the pair of front wheels 74, the power may be transmitted to the pair of rear wheels 75, which makes it possible to reduce the understeer. Further, since the power distributed to the pair of front wheels and the pair of rear wheels is adjusted smoothly, which improves the drivability. The power distribution program PN2 is a program for controlling the operation of the power distribution device 86A.

As described above, in order to solve the technical task TC2 that the understeer becomes greater as the racing vehicle 10 corners on a low friction road, the developer 24 develops the power distribution device 86A and the power distribution program PN2 as the new technology NT2. The development tool 15 sends new technology data NTD2 related to the power distribution device 86A and the power distribution program PN2 to the server 12.

For example, in order to solve the technical task TC3 that the wiping speed of the wiper 69 is slow even though "speed 3" is selected, the developer 24 develops a wiper drive program PN3 so as to increase the wiping speed of the wiper 69 when "speed 3" is selected.

As described above, the developer 24 uses the development tool 15 to develop the wiper drive program PN3 as the new technology NT3 so as to solve the technical task related to the wiping speed of the wiper 69.

The development tool 15 sends new technology data NTD3 related to the new technology NT3 to the server 12.

In Fig. 1, the new technology data NTD1 to NTD3 each includes a vehicle ID of the racing vehicle 10. The new technology data NTD1 to NTD3 are stored in the server 12.

The server 12 sends the new technology data NTD1 to NTD2 to the manufacturing device 18. The manufacturing device 18 manufactures the undercover 71A and the power distribution device 86A.

The manufactured undercover 71A and the power distribution device 86A are delivered to a maintenance pit 19.

In the maintenance pit 19, the mechanic crew removes the undercover 71 and the power distribution device 86 from the racing vehicle 10 and attaches the undercover 71A and the power distribution device 86A.

Then, the mechanic crew installs the power distribution program PN2 and the wiper drive program PN3 in the controller 79. The racing vehicle 10 receives the power distribution program PN2 and the wiper drive program PN3 from the server 12 through the communication device 21.

Then, the racing vehicle 10 updates the power distribution program P2 and the wiper drive program P3 to the power distribution program PN2 and the wiper drive program PN3, respectively.

Thus, the racing vehicle 10A is constructed by attaching the undercover 71A and the power distribution device 86A to the racing vehicle 10 and updating each program.

The racing vehicle 10A participates in a motor racing event WRC2. The plurality of sensors 20 provided in the racing vehicle 10A acquire various travel data D10 from the racing vehicle 10A travelling along a course. Then, each sensor 20 sends the travel data D10 to the controller 79. The controller 79 sends the travel data D10 to the server 12 through the communication device 21.

Then, the mechanic crew 22A sends input data D12 including at least one of the damage data and the mobility data to the server 12.

The analysis device 13A acquires the travel data D10 and the input data D12 from the server 12.

The analyst 23A evaluates the performance of the new technology NT1 and the new technology NT2 based on the travel data D10 and the input data D12.

For example, regarding the new technology NT1, whether or not the temperature of the engine 72 of the racing vehicle 10 is prevented from rising is determined based on the travel time and the oil-water temperature. In the present embodiment, the temperature of the engine 72 is prevented from rising.

Then, the analyst 23A creates performance data PD1 indicating that the performance is improved by the new technology NT1. The analysis device 13A sends the performance data PD1 to the server 12.

For example, regarding the new technology NT2, the understeer is prevented from occurring as the racing vehicle 10A corners on a low friction road. Regarding the new technology NT3, the wiping speed of the wiper 69 is improved when "speed 3" is selected.

The analyst 23A creates performance data PD2 indicating that the performance is improved by the new technology NT2 and performance data PD3 indicating that the performance is improved by the new technology NT3. The analysis device 13A sends the performance data PD2 and PD3 to the server 12.

Each of the performance data PD1 to PD3 includes a flag indicating that each of the new technologies NT1 to NT3 has a technical effect.

The analyst 23A extracts a technical task of the racing vehicle 10A based on the travel data D10 and the input data D12.

For example, the analyst 23A uses the analysis device 13 to extract a technical task TC4 that the response of the engine of the racing vehicle 10 is poor based on the depression amount of the accelerator pedal, the engine speed, the oil-water temperature, and the mobility information.

Then, the analysis device 13 sends task data D4 related to the technical task TC4 extracted by the analyst 23A to the server 12.

Each of the performance data PD1 to PD3 and the task data D4 includes a vehicle ID of the racing vehicle 10A. In addition, the performance data PD1 includes an ID identifying the new technology NT1 (new technology data NTD1). Similarly, the performance data PD2 includes an ID identifying the new technology NT2 (new technology data NTD2), and the performance data PD3 includes an ID identifying the new technology NT3 (new technology data NTD3).

The development tool 15A is used by a developer 24A to acquire the task data D4 of the racing vehicle 10A from the server 12 and develop a new technology NT4 so as to solve the technical task TC4.

Fig. 11 is a schematic diagram schematically illustrating the new technology NT4. The developer 24A develops a new air cleaner 73A and a new engine control program PN1 as the new technology NT4 so as to solve the technical task TC4 that the response of the engine 72 is poor.

As compared with the air cleaner 73, the air cleaner 73A improves air ventilation while maintaining dust resistance, corrosion resistance, and dust collection ability. By incorporating the air cleaner 73A in the racing vehicle 10 to replace the air cleaner 73, it is possible to improve the amount of air supplied to the engine 72.

The engine control program PN1 is configured to control the operation of the engine 72 in response to changes on the amount of air supplied to the engine 72 due to the replacement of the air cleaner 73A.

In this way, by attaching the air cleaner 73A to the racing vehicle 10A and updating the engine control program P1 to the engine control program PN1, it is possible to improve the response of the engine 72.

As described above, in order to solve the technical task that the response of the engine 72 is poor, the developer 24A develops the air cleaner 73A and the engine control program PN1 as the new technology NT4.

The development tool 15 sends new technology data NTD4 related to the new technology NT4 to the server 12.

The server 12 sends the new technology data NTD4 to the manufacturing device 18A. The manufacturing device 18A manufactures the air cleaner 73A based on the new technology data NTD4.

The manufactured air cleaner 73A is delivered to the maintenance pit 19A, and the mechanic crew removes the air cleaner 73 from the racing vehicle 10A and attaches the air cleaner 73A to the racing vehicle 10A.

Then, the mechanic crew installs the engine control program PN1 in the controller 79 of the racing vehicle 10A. The racing vehicle 10 receives the engine control program PN1 from the server 12 through the communication device 21. Then, the racing vehicle 10A updates the engine control program P1 to the engine control program PN1.

In this way, a new racing vehicle 10B is constructed. The racing vehicle 10B also participates in a new motor racing event.

The technical effect of the new technology NT4 is confirmed by racing the racing vehicle 10B in a new motor racing event.

In the first embodiment, the technical effect of each of the new technologies NT1 to NT3 is confirmed by racing the racing vehicle 10A in the motor racing event WRC2, and each of the performance data PD1 to PD3 includes a flag indicating that the technical effect of each of the new technologies NT1 to NT3 has been confirmed.

The server 12 sends the new technology data NTD1 to NTD3 related respectively to the new technologies NT1 to NT3 whose technical effect has been confirmed and the performance data PD1 to PD3 to the summarization tool 30.

If the performance data PD1 does not include a flag indicating a technical effect, the server 12 does not send the new technology data NTD1 and the performance data PD1 to the summarization tool 30.

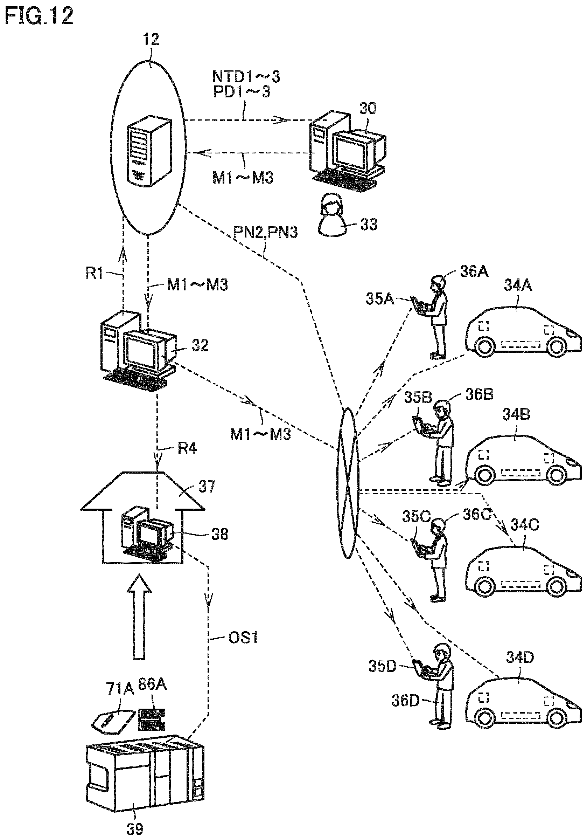

Fig. 12 is a schematic diagram illustrating the technology notification system 3.

The technology notification system 3 includes a summarization tool 30, a distribution device 32, user vehicles 34A to 34D, user terminals 35A to 35D, a service provider 37, a provider terminal 38, and a manufacturing device 39.

The summarization tool 30 is used by an operator 33 to acquire the new technology data NTD1 to NTD3 and the performance data PD1 to PD3 from the server 12 and create notification messages M1 to M3. The operator 33 uses the summarization tool 30 to create the notification messages M1 to M3. Each notification message includes technology notification information N1 indicating a new technology, replacement information N2 indicating whether or not it is required to replace a component, update information N3 indicating whether or not it is required to update a program, type information N4 indicating whether the new technology is optional or essential, and fee information N5 indicating whether the new technology is free or not.

The notification message M1 is a message related to the new technology NT1, the notification messages M2 is a message related to the new technology NT2, and the notification message M3 is a message related to the new technology NT3. The relationship between the information N1 to N5 in each of the notification messages M1 to M3 is illustrated in Table 1 below.

The technology notification information N1 includes a technical summary of each of the new technologies NT1 to NT3. The technology notification information N1 in each of the notification messages M1 to M3 is created by the operator 33 based on the new technology data NTD1 to NTD4 and the performance data PD1 to PD4, respectively. "YES" in the column of technology notification information N1 indicates that a technical summary is described for each new technology. "YES" in the column of replacement information N2 indicates that it is required to replace a component, and "NO" in the column of replacement information N2 indicates that it is not required to replace a component. "YES" in the column of update information N3 indicates that it is required to update a program, and "NO" in the column of update information N3 indicates that it is not required to update a program.

"YES" in the column of type information N4 indicates that the new technology is essential irrespective of the selection of the user 36, and "NO" in the column of type information N4 indicates that the new technology is optional based on the selection of the user 36.

In other words, each of the new technologies NT1 and NT2 is an optional technology that may be selected and incorporated into the user vehicle by each user. Each of the notification messages M1 and M2 serves as a selection notification which allows each user to decide whether or not to incorporate the new technologies NT1 and NT2 as optional technologies into each user vehicle.

On the other hand, the new technology NT3 is an essential technology to be incorporated in the user vehicle regardless of the selection of each user. The notification message M3 serves as a contact notification indicating that the new technology NT3 is an essential technology to be incorporated into the user vehicle.

"YES" in the column of fee information N5 indicates that the new technology is paid, and "NO" in the column of fee information N5 indicates that the new technology is free. Specifically, since the fee information N5 in the notification messages M1 and M3 is "NO", even if the new technologies NT1 and NT3 are incorporated, the monthly flat fee to be paid by the users 36A to 36D will not change. On the other hand, since the fee information N5 in the notification message M2 is "YES", if the new technology NT2 is incorporated, the monthly flat fee will rise.

**[Table 1]**

| | N1 | N2 | N3 | N4 | N5 |
|---|---|---|---|---|---|
| M1 | YES | YES | NO | NO | NO |
| M2 | YES | YES | YES | NO | YES |
| M3 | YES | NO | YES | YES | NO |

The technology notification information N1 in the notification message M1 includes a technical summary of the undercover 71A and information indicating that the cooling efficiency of the engine 72 is improved by adopting the undercover 71A.

The technology notification information N1 in the notification message M2 includes a technical summary of the power distribution device 86A and the power distribution program PN2 and information indicating that the slip is suppressed by incorporating the power distribution device 86A and the power distribution program PN2.

The technology notification information N1 in the notification message M3 includes information indicating that the wiping speed of the wiper 69 is improved.

Then, the summarization tool 30 sends the notification messages M1 to M3 created by the operator 33 to the distribution device 32.

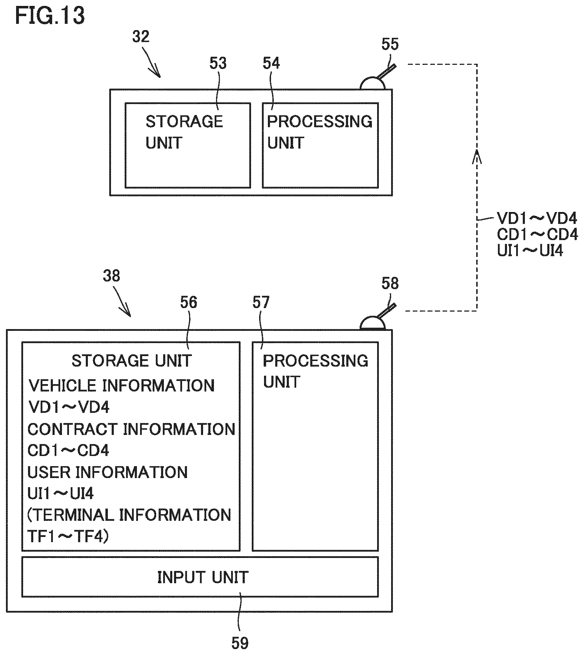

Fig. 13 is a schematic diagram schematically illustrating the distribution device 32 and the provider terminal 38. The provider terminal 38 is a terminal used by the service provider 37. The service provider 37, for example, receives a monthly flat fee from the users 36A to 36D in exchange for a service to rent the user vehicles 34A to 34D to the users 36A to 36D, respectively, for a predetermined period of time. The service provider 37 also performs maintenance of the user vehicles 34A to 34D. The service provider 37 is, for example, an automobile dealer.

The provider terminal 38 includes a storage unit 56, a processing unit 57, a communication unit 58, and an input unit 59. The storage unit 56 stores vehicle information VD1 to VD4 of the user vehicles 34A to 34D, contract information CD1 to CD4 of the users 36A to 36D, and user information UI1 to UI4 of the users 36A to 36D.

The vehicle information VD1 to VD4 is stored in the storage unit 53, for example, when the users 36A to 36D make a contract with the service provider 37 to use the user vehicles 34A to 34D. For example, the vehicle information VD1 includes vehicle type information indicating the vehicle type of the user vehicle 34A and terminal information of the communication device 21 of the user vehicle 34A. The terminal information of the communication device 21 includes a communication address or the like of the communication device 21.

The contract information CD1 to CD4 includes, for example, information indicating a monthly flat fee to be paid by each of the users 36A to 36D, information indicating a contract period, a contract start time and a contract end time of each of the users 36A to 36D, information identifying the user vehicles 34A to 34D to be used by each of the users 36A to 36D, and information such as the name of each of the users 36A to 36D.

The user information UI1 to UI4 includes terminal information TF1 to TF4 of the user terminals 35A to 35D, and information indicating names, addresses and the like of the users 36A to 36D. The terminal information TF1 to TF4 includes information such as an IP address and a mail address of each of the user terminals 35A to 35D.

The provider terminal 38 sends the vehicle information VD1 to VD4 of the user vehicles 34A to 34D, the contract information CD1 to CD4, and the user information UI1 to UI4 to the distribution device 32 through the communication unit 58.

The distribution device 32 includes a storage unit 53, a processing unit 54, and a communication unit 55. The storage unit 53 stores vehicle information VD0 of the racing vehicle 10, vehicle information VD1 to VD4 of the user vehicles 34A to 34D, contract information CD1 to CD4, and user information UI of the users 36A to 36D.

The vehicle information VD0 includes information indicating the vehicle type of the racing vehicle 10. The vehicle information VD0 of the racing vehicle 10 is stored in the storage unit 53 when the racing vehicle 10 participates in a motor racing event.

The distribution device 32 receives the vehicle information VD1 to VD4 of the user vehicles 34A to 34D, the contract information CD1 to CD4, and the user information UI1 to UI4 from the provider terminal 38 through the communication unit 55. Then, the distribution device 32 stores the vehicle information VD1 to VD4 of the user vehicles 34A to 34D, the contract information CD1 to CD4, and the user information UI1 to UI4 in the storage unit 53.

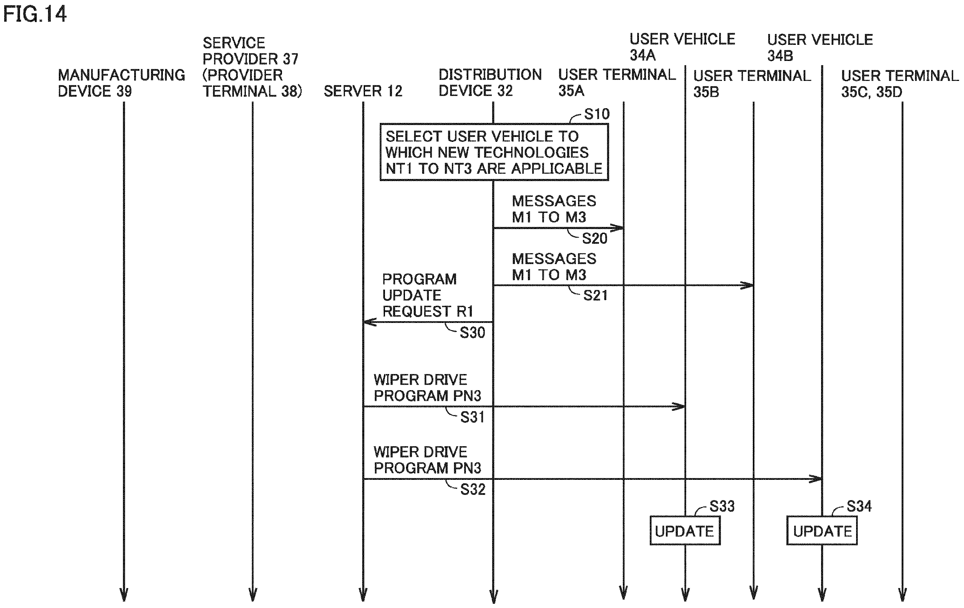

Fig. 14 is a schematic diagram schematically illustrating a relationship between the distribution device 32, the user terminals 35A to 35D, the service provider 37, and the like.

The processing unit 54 of the distribution device 32 selects a user vehicle to which the new technologies NT1 to NT3 are applicable (step 10). In the present embodiment, a user vehicle having the same vehicle type as the racing vehicle 10 (10A) is selected from the plurality of user vehicles 34A to 34D. Various methods may be adopted to select a user vehicle to which the new technologies NT1 to NT3 are applicable.

As an example, suppose that the user vehicles 34A and 34B have the same type as the racing vehicle 10. In this case, the communication unit 55 of the distribution device 32 sends the notification messages M1 to M3 including technology notification information of the new technologies NT1 to NT3 to each of the user terminals 35A and 35B (step 20 and step 21).

Thus, the users 36A and 36B may obtain the technology information related to the new technologies NT1 to NT3.

Since each of the notification messages M1 to M3 includes the technology notification information N1, the users 36A and 36B may know the technical summary of each of the new technologies NT1 to NT3.

Further, based on the replacement information N2 and the update information N3, the users 36A and 36B may know whether or not it is required to replace a component and whether or not it is required to update a program when the new technologies NT1 to NT3 are incorporated into the user vehicles 34A and 34B. Based on the type information N4, the users 36A and 36B may know whether the notification is a contact notification or a selection notification.

Based on the notification message M3, the users 36A and 36B may know in advance that the new technology NT3 is to be incorporated into the user vehicles 34A and 34B as an essential technology.

Based on the fee information N5, the users 36A and 36B may know the expense required to incorporate each of the new technologies NT1 to NT3 into the user vehicle 34A.

After sending the notification messages M1 to M3, the distribution device 32 sends a program update request R1 to the server 12 (step 30). The program update request R1 includes a communication address of the communication device 21 of the user vehicles 34A and 34D.

Upon receipt of the program update request R1, the server 12 sends the wiper drive program PN3 to the user vehicle 34A and the user vehicle 34B, respectively (step 31 and step 32).

Upon receipt of the wiper drive program PN3, the user vehicle 34A and the user vehicle 34B update the wiper drive program P3 stored in the control unit to the wiper drive program PN3 (step 33 and step 34).

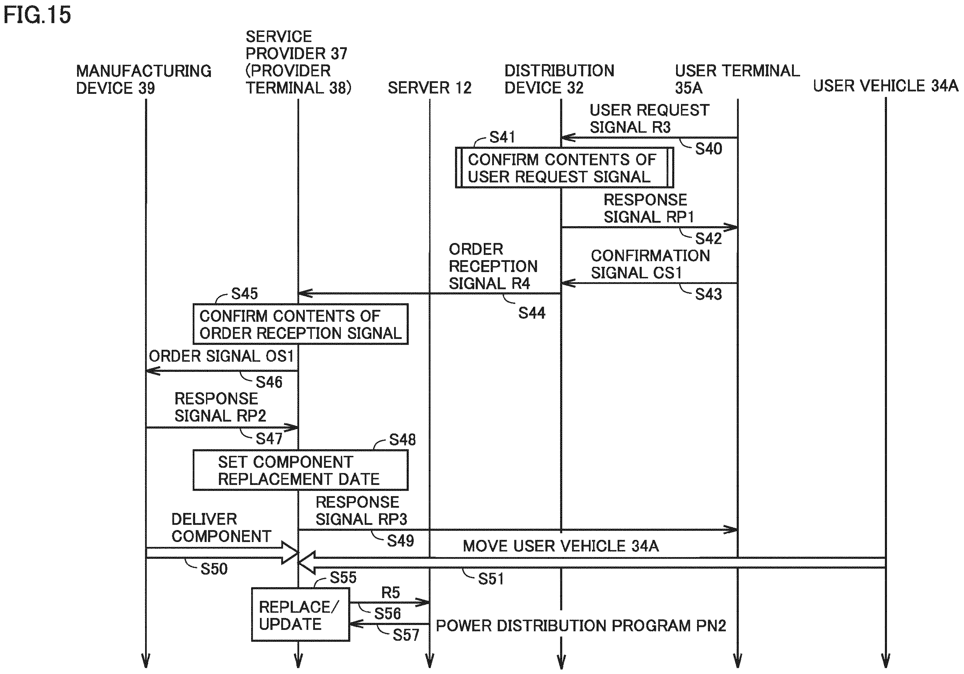

Fig. 15 is a schematic diagram schematically illustrating a relationship between the distribution device 32, the user terminal 35A, the service provider 37, and the like.

Fig. 15 illustrates an example in which the user 36A selects the new technology NT1 and the new technology NT2 to be incorporated into the user vehicle 34A.

The user 36A may use the user terminal 35A to select the new technologies NT1 and NT2 to be incorporated into the vehicle 34A. Based on the fee information N5 in the notification message M2, the user 36A may know in advance that if the new technology NT2 is incorporated, the monthly flat fee of the user vehicle 34A will rise.

The user terminal 35A sends a user request signal R3 requesting to incorporate the new technology NT1 and the new technology NT2 into the user vehicle 34A (step 40).

The user request signal R3 includes information indicating that the new technology NT1 and the new technology NT2 are requested, information identifying the user 36A, information indicating the user terminal 35A, and a vehicle ID identifying the user vehicle 34A.

Upon receipt of the user request signal R3, the distribution device 32 confirms the contents of the user request signal R3 (step 41).

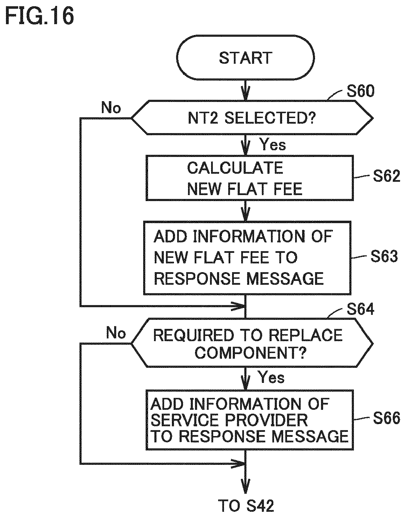

Fig. 16 is a flowchart illustrating the confirmation of the contents of the user request signal R3 in step 41. Upon receipt of the user request signal R3, the distribution device 32 determines whether or not the new technology NT2 is selected in the user request signal R3 (step 60). If it is determined that the new technology NT2 is selected (Yes in step 60), the distribution device 32 calculates a new monthly flat fee from the next month (step 62).

For example, the distribution device 32 calculates the remaining months of the contract period, an expense required to incorporate the new technology NT2, and a monthly flat fee to be paid by the user 36A. As described above, in the present embodiment, the distribution device 32 functions as a charging unit which charges the user 36A a flat fee.

Next, the distribution device 32 adds information of the new monthly flat fee to the response message of a response signal RP1 (step 63).

Then, the distribution device 32 determines whether or not it is required to replace a component in the new technology selected in the user request signal R3 (step 64).

In the example illustrated in Fig. 10, it is required to replace components (the undercover 71A and the power distribution device 86A) in both the new technology NT1 and the new technology NT2.

After determining that it is required to replace a component (Yes in step 64), the distribution device 32 adds the information of the service provider 37 to a response message of the response signal RP1 (step 66). This is because it is required to replace a component by the service provider 37. The information of the service provider 37 includes information such as location information, business hours, and contact information of the service provider 37.

Then, the distribution device 32 sends the response signal RP1 including the response message to the user terminal 35A (step 42).

In the present embodiment, the response signal RP1 includes information indicating the new monthly flat fee, information related to the service provider 37, and information indicating that the user request signal R3 requesting to incorporate the new technologies NT1 and NT2 has been received.

On the other hand, if it is determined that the new technology NT2 is not selected in the user request signal R3 (No in step 60), the response signal RP1 does not include information related to the new monthly flat fee.

If it is determined the new technology selected in the user request signal R3 does not require the replacement of a component (No in step 64), the response signal RP1 does not include the information related to the service provider 37. If the distribution device 32 determines that it is not required to replace a component, the steps from step 44 to step 74, which will be described later, will not be performed.

In Fig. 15, after the user terminal 35A receives the response signal RP1, the user 36A confirms the information related to the new monthly flat fee, the request contents (incorporation of the new technology NT1 and the new technology NT2), and the information related to the service provider 37.

After the user 36A successfully confirms the information as mentioned above, the user 36A uses the user terminal 35A to send a confirmation signal CS1 (step 43).

Upon receipt of the confirmation signal CS1, the distribution device 32 sends an order reception signal R4 to the provider terminal 38 of the service provider 37 (step 44). The order reception signal R4 includes the user information UI of the user 36A, the terminal information TF of the user terminal 35A, the vehicle information VD1 of the user vehicle 34A, and the information indicating that the new technology NT1 and the new technology NT2 have been requested.

Upon receipt of the order reception signal R4, the provider terminal 38 confirms the contents of the order reception signal (step 45). The provider terminal 38 confirms items required by the new technology included in the order reception signal R4. Then, the provider terminal 38 sends an order signal OS1 for ordering the undercover 71A of the new technology NT1 and the power distribution device 86A of the new technology NT3 to the manufacturing device 39 (step 46).

Upon receipt of the order signal OS1, the manufacturing device 39 sends a response signal RP2 (step 47). The response signal RP2 includes delivery information indicating a delivery date on which the undercover 71A and the power distribution device 86A are delivered to the service provider 37.

Upon receipt of the response signal RP2, the service provider 37 sets a component replacement date on which the service provider 37 replaces a component for the user 36A (step 48). The component replacement date is set after the delivery date on which the undercover 71A and the power distribution device 86A are delivered to the service provider 37. Then, the service provider 37 sends a response signal RP3 to the user terminal 35A (step 49). The response signal RP3 includes information indicating a date for replacing the undercover 71A and the power distribution device 86A and information identifying the service provider 37 which performs the component replacement such as the address of the service provider 37.

Based on the response signal RP3 received by the user terminal 35A, the user 36A may know the date to visit the service provider 37.

The manufacturing device 18 manufactures the undercover 71A and the power distribution device 86A specified by the order signal OS1. The manufactured undercover 71A and power distribution device 86A are delivered to the service provider 37 (step 50).

When the user vehicle 34A visits the service provider 37 on the component replacement date (step 51), the mechanic crew of the service provider 37 replaces the undercover 71 and the power distribution device 86 of the user vehicle 34A with the undercover 71A and the power distribution device 86A, and updates the program (step 55).

In order to update the program, the mechanic crew uses the provider terminal 38 to send a program update request R5 to the server 12 (step 56). The program update request R5 includes terminal information of the communication device 21 of the user vehicle 34A and information indicating that the power distribution program PN2 is requested.

Upon receipt of the program update request R5, the server 12 sends the power distribution program PN2 to the user vehicle 34A (step 57).

Upon receipt of the power distribution program PN2, the user vehicle 34A updates the power distribution program P2 stored in the storage unit of the user vehicle 34A to the power distribution program PN2.

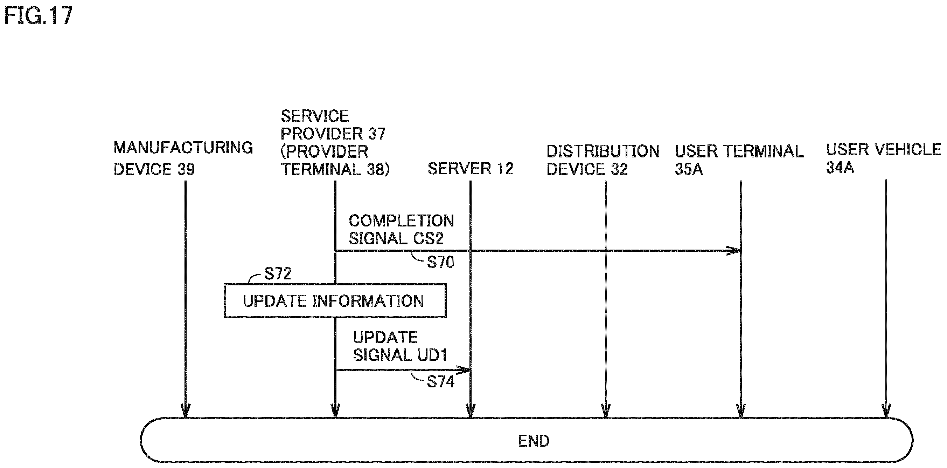

Fig. 17 is a schematic diagram schematically illustrating a relationship between the distribution device 32, the user terminals 35A to 35D, the service provider 37, and the like.

After the service provider 37 has completed the incorporation of the new technology NT1 and the new technology NT3, the provider terminal 38 sends a completion signal CS2 to the user terminal 35A (step 70).

Based on the completion signal CS2 received by the user terminal 35A, the user 36A may know that the service provider 37 has completed the incorporation operation, and may go to the service provider 37 to pick up the user vehicle 34A.

The provider terminal 38 updates the information stored in the storage unit 56 (step 72). Specifically, the provider terminal 38 updates the contract information CD1 of the user 36A and the vehicle information VD1 of the user vehicle 34A. The provider terminal 38 updates the monthly flat fee to be paid by the user 36A in the contract information CD1. Further, the provider terminal 38 adds, to the vehicle information VD1, information indicating that the new technology NT1 and the new technology NT2 have been incorporated. Then, the provider terminal 38 sends an update signal UD1 including the updated contract information CD1 and vehicle information VD1 to the server 12 (step 74).

As described above, according to the present embodiment, the user 36A may incorporate a new technology, which has been applied to a racing vehicle 10A participating in a motor racing event and the technical effect thereof has been confirmed in the motor racing event, into the user vehicle 34A. In particular, not only software but also hardware may be updated.

Further, if only the new technology NT1 is incorporated, the monthly flat fee to be paid by the user 36A does not change.

Furthermore, regarding the new technology NT3, the wiper drive program PN3 is automatically distributed to the target vehicles, i.e., the user vehicles 34A and 34B, and the wiper drive program P3 in each of the user vehicles 34A and 34B is automatically updated to the wiper drive program PN3.

In the present embodiment, it is described that the users 36A to 36D use a service with a monthly flat fee, but the service with a monthly flat fee is not essential to the system according to the present disclosure.

Further, for example, a technology with no technical task extracted in a motor racing event may also be notified to each user. Thus, each of the users 36A to 36D may confirm the reliability of each of the user vehicles 34A to 34D at the present time based on the notification.

In the present embodiment, it is described that the distribution device 32 sends the notification messages M1 to M3 to each of the user terminals 35A and 35B. However, it is acceptable that the distribution device 32 sends the notification messages M1 to M3 to each of the user vehicles 34A and 34B. In this case, the contents of each of the notification messages M1 to M3 are displayed on a navigation screen or the like mounted on the user vehicles 34A and 34B. Thus, the user terminal includes not only the user terminals 35A to 35D but also any receiving devices mounted on the user vehicles 34A to 34D.

### (Second Embodiment)

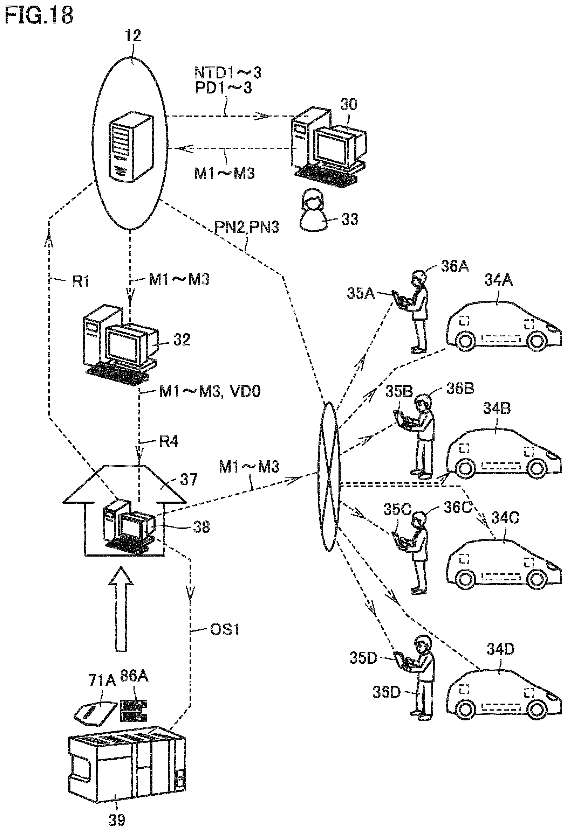

A technology development system 1A according to a second embodiment will be described with reference to Fig. 18. The technology development system 1 includes a development system 2 and a technology notification system 3A.

Fig. 18 is a schematic diagram schematically illustrating the technology notification system 3A. In the technology notification system 3A, the distribution device 32 sends notification messages M1 to M3 and vehicle information VD0 to the provider terminal 38.

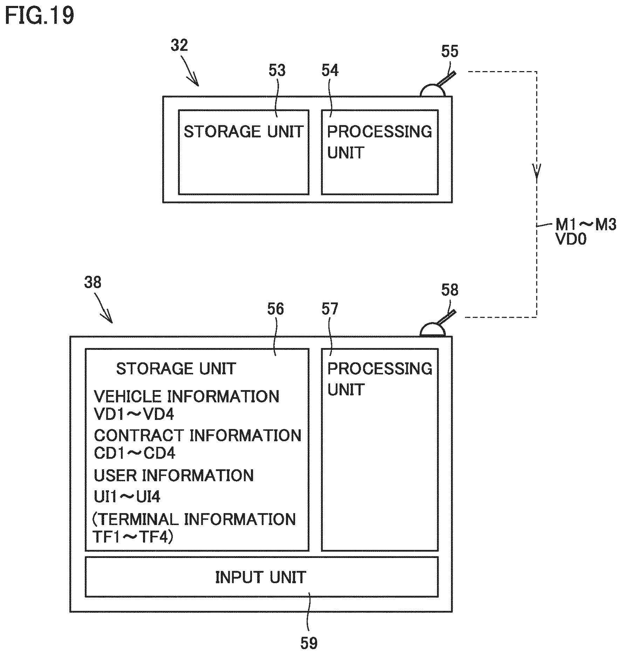

Fig. 19 is a schematic diagram schematically illustrating the distribution device 32 and the provider terminal 38. The storage unit 56 of the provider terminal 38 stores vehicle information VD1 to VD4 of the user vehicles 34A to 34D, contract information CD1 to CD4 of the users 36A to 36D, and user information UI1 to UI4 of the users 36A to 36D.

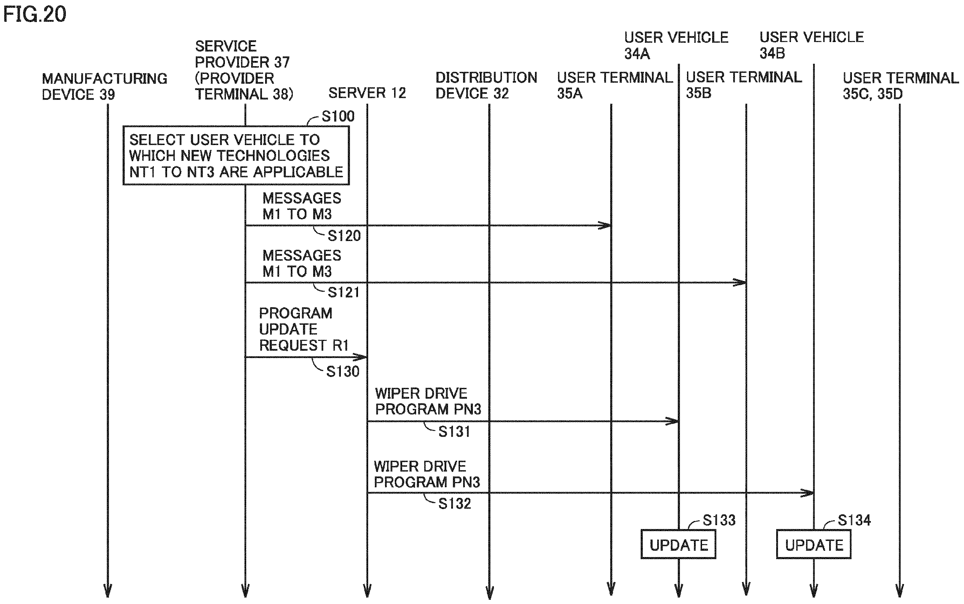

Fig. 20 is a schematic diagram schematically illustrating a relationship between the manufacturing device 39, the provider terminal 38, the server 12, the user terminal 35, and the like.

The provider terminal 38 selects a vehicle to which the new technologies NT1 to NT3 are applicable from the user vehicles 34A to 36D based on the vehicle information VD0 and the vehicle information VD1 to VD4 (step 100). In the example illustrated in Fig. 20, the service provider 37 selects the user vehicle 34A and the user vehicle 34B.

The provider terminal 38 distributes the notification messages M1 to M3 to the user terminals 35A and 35B of the users 36A and 36B of the user vehicles 34A and 34B or to the user vehicles 34A and 34B (step 120 and step 121).

Then, the provider terminal 38 sends a program update request R1 to the server 12 (step 130). The program update request R1 includes a communication address of the communication device 21 of the user vehicles 34A and 34D.

Upon receipt of the program update request R1, the server 12 sends the wiper drive program PN3 to the user vehicle 34A and the user vehicle 34B (step 131 and step 132).

Upon receipt of the wiper drive program PN3, the user vehicle 34A and the user vehicle 34B update the wiper drive program P3 stored in the control unit to the wiper drive program PN3 (step 133 and step 134).

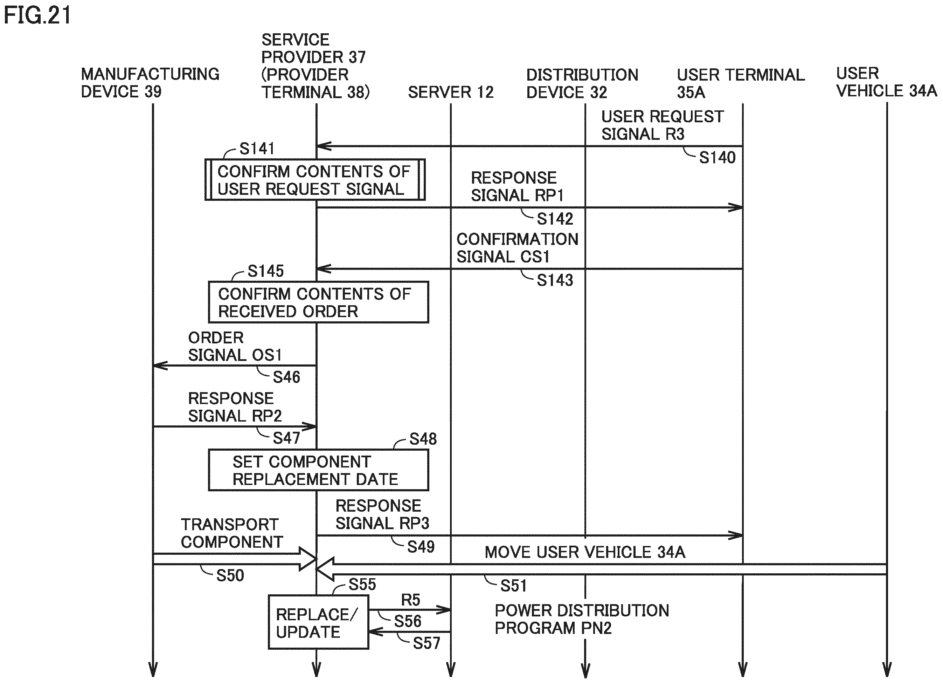

Fig. 21 is a schematic diagram schematically illustrating a relationship between the manufacturing device 39, the provider terminal 38, the server 12, the user terminal 35, and the like.

Fig. 21 illustrates an example in which the user 36A selects to incorporate the new technology NT1 and the new technology NT2 into the user vehicle 34A.

The user terminal 35A sends a user request signal R3 requesting to incorporate the new technology NT1 and the new technology NT2 into the user vehicle 34A (step 140).

Upon receipt of the user request signal R3, the provider terminal 38 confirms the contents of the user request signal R3 (step 141).

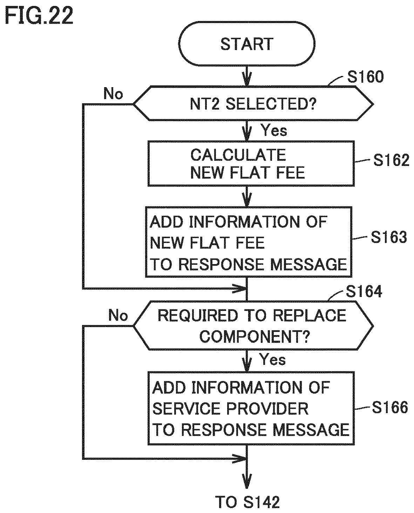

Fig. 22 is a flow chart illustrating the confirmation of the contents of the user request signal R3 in step 141. Upon receipt of the user request signal R3, the provider terminal 38 determines whether or not the new technology NT2 is selected in the user request signal R3 (step 160). If it is determined that the new technology NT2 is selected (Yes in step 160), the provider terminal 38 calculates a new monthly flat fee from the next month (step 162).

The provider terminal 38 calculates the remaining months of the contract period, an expense required to incorporate the new technology NT2, and a monthly flat fee to be paid by the user 36A. As described above, in the present embodiment, the distribution device 32 functions as a charging unit which charges the user 36A a monthly flat fee.

Next, the provider terminal 38 adds information of the new monthly flat fee to the response message of the response signal RP1 (step 163).

Next, the provider terminal 38 determines whether or not it is required to replace a component in the new technology selected in the user request signal R3 (step 164).

In the example illustrated in Fig. 22, it is required to replace components (the undercover 71A and the power distribution device 86A) in both the new technology NT1 and the new technology NT2.

After determining that it is required to replace a component (Yes in step 164), the provider terminal 38 adds the information of the service provider 37 to the response message of the response signal RP1 (step 166). This is because the component is required to be replaced by the service provider 37. If the provider terminal 38 determines that it is not required to replace a component, the steps from step 145 to step 51, which will be described later, will not be performed.

Then, the provider terminal 38 sends the response signal RP1 including the response message to the user terminal 35A (step 142).

In the present embodiment, the response signal RP1 includes information indicating the new monthly flat fee, information related to the service provider 37, and information indicating that the user request signal R3 requesting to incorporate the new technologies NT1 and NT2 has been received.

In Fig. 21, after the user terminal 35A receives the response signal RP1, the user 36A confirms the information related to the new monthly flat fee, the request contents (incorporation of the new technology NT1 and the new technology NT2), and the information related to the service provider 37.

On the other hand, if it is determined that the new technology NT2 is not selected in the user request signal R3 (No in step 160), the response signal RP1 does not include information related to the new monthly flat fee.

If it is determined the new technology selected in the user request signal R3 does not require to replace a component (No in step 164), the response signal RP1 does not include the information related to the service provider 37.

After the user 36A successfully confirms the information as mentioned above, the user 36A uses the user terminal 35A to send a confirmation signal CS1 to the provider terminal 38 (step 143).

Upon receipt of the confirmation signal CS1, the provider terminal 38 confirms the contents of the received order (step 145). The provider terminal 38 confirms items required by the new technology included in the confirmation signal CS1.

In Fig. 21, the steps from step 46 to step 72 after step 145 are substantially the same as those in the first embodiment, and thus the detailed description thereof will not be repeated.

Similarly in the second embodiment, the provider terminal 38 sends an order signal OS1 to the manufacturing device 39 (step 46), and upon receipt of the order signal OS1, the manufacturing device 39 sends a response signal RP2 to the provider terminal 38 (step 47).

Upon receipt of the response signal RP2, the service provider 37 sets a component replacement date on which the service provider 37 replaces a component for the user 36A (step 48). Then, the service provider 37 sends a response signal RP3 to the user terminal 35A (step 49). The response signal RP3 includes information related to the component replacement date and information related to the service provider 37 which performs component replacement such as the contact address and the address of the service provider 37. The manufacturing device 39 manufactures the undercover 71A and the power distribution device 86A specified by the order signal OS1. The manufactured undercover 71A and power distribution device 86A are delivered to the service provider 37 (step 50). Thereafter, when the user vehicle 34A visits the service provider 37 on the component replacement day (step 51), the mechanic crew of the service provider 37 replaces the undercover 71 and the power distribution device 86 of the user vehicle 34A with the undercover 71A and the power distribution device 86A, and updates the program (step 55). In order to update the program, the mechanic crew uses the provider terminal 38 to send a program update request R5 to the server 12 (step 56). Upon receipt of the program update request R5, the server 12 sends the power distribution program PN2 to the user vehicle 34A (step 57).

Upon receipt of the power distribution program PN2, the user vehicle 34A updates the power distribution program P2 stored in the storage unit of the user vehicle 34A to the power distribution program PN2.

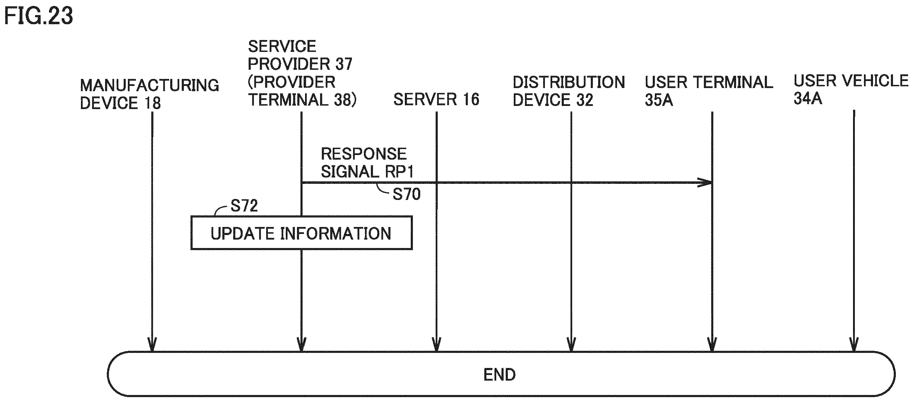

Fig. 23 is a schematic diagram schematically illustrating a relationship between the manufacturing device 39, the provider terminal 38, the server 12, the user terminal 35, and the like.

After the service provider 37 has completed the incorporation of the new technology NT1 and the new technology NT2, the provider terminal 38 sends a completion signal CS2 to the user terminal 35A (step 70). The provider terminal 38 updates the information stored in the storage unit 56 (step 72). Specifically, the provider terminal 38 updates the contract information CD1 of the user 36A and the vehicle information VD1 of the user vehicle 34A. The provider terminal 38 updates the monthly flat fee to be paid by the user 36A included in the contract information CD1. Further, the provider terminal 38 adds, to the vehicle information VD1, information indicating that the new technology NT1 and the new technology NT2 have been incorporated.

According to the second embodiment, similar to the first embodiment, the user 36A may incorporate a new technology whose technical effect has been confirmed in a motor racing event into the user vehicle 34A. In particular, not only software but also hardware may be updated.

Although the embodiments of the present disclosure have been described as above, it should be understood that the embodiments disclosed herein are illustrative and non-restrictive in every respect. The scope of the present disclosure is defined by the terms of the claims, and is intended to include any modifications within the meaning and scope equivalent to the terms of the claims.

## Claims

1. A technology notification system comprising:
a server (12) configured to store new technology data related to a new technology whose technical effect has been confirmed by racing a racing vehicle (10) incorporated with the new technology in a motor racing event; and
a distribution device (32) configured to distribute technology notification information related to the new technology data.

2. The technology notification system according to claim 1, further comprising a provider terminal (38) to be used by a service provider (37) to provide a service related to a user vehicle (34A to 34D) of a user, wherein
the distribution device (32) is configured to distribute the technology notification information to the provider terminal (38).

3. The technology notification system according to claim 2, wherein
the provider terminal (38) is configured to distribute the technology notification information to a user terminal (35A to 35D) of the user of the user vehicle (34A to 34D) to which the new technology is applicable.

4. The technology notification system according to claim 3, wherein
the provider terminal (38) is configured to receive a user request signal (R3) from the user terminal (35A to 35D),
when determining that the new technology selected in the user request signal (R3) requires to replace a component, the provider terminal (38) is configured to send information of the service provider (37) for replacing the component to the user terminal (35A to 35D).

5. The technology notification system according to claim 1, wherein
the distribution device (32) is configured to distribute the technology notification information to a user terminal (35A to 35D) of the user of the user vehicle (34A to 34D) to which the new technology is applicable.

6. The technology notification system according to claim 5, wherein
the provider terminal (38) is configured to receive a user request signal (R3) from the user terminal (35A to 35D),
when determining that a new technology selected in the user request signal (R3) requires to replace a component, the provider terminal (38) is configured to send information of the service provider (37) for replacing the component to the user terminal (35A to 35D).

7. The technology notification system according to any one of claims 1 to 6, wherein
the new technology includes an optional technology (NT1, NT2) to be incorporated into the user vehicle (34A to 34D) of the user based on the user's selection, and an essential technology (NT3) to be incorporated into the user vehicle irrespective of the user's selection, and
the technology notification information includes a selection notification (M1, M2) which is configured to notify the user to select whether or not to incorporate the optional technology into the user vehicle, and a contact notification (M3) which is configured to notify the user that the essential technology is to be incorporated into the user vehicle.

8. The technology notification system according to any one of claims 1 to 7, wherein
the new technology includes a technology related to software and a technology related to hardware.

9. The technology notification system according to any one of claims 1 to 8 further comprising a charging unit which is configured to charge the user of the user vehicle (34A to 34D) a usage fee to be paid to the service provider (37).
